(19) Europäisches Patentamt
European Patent Office
Office européen des brevets

(11) Veröffentlichungsnummer: **0 231 305**
**B1**

(12) **EUROPÄISCHE PATENTSCHRIFT**

(45) Veröffentlichungstag der Patentschrift: **30.05.90**

(51) Int. Cl.$^5$: **G 01 N 27/00**

(21) Anmeldenummer: **86904807.4**

(22) Anmeldetag: **23.07.86**

(86) Internationale Anmeldenummer:
**PCT/EP86/00436**

(87) Internationale Veröffentlichungsnummer:
**WO 87/00633 29.01.87 Gazette 87/03**

# (54) SENSOREN FÜR DIE SELEKTIVE BESTIMMUNG VON KOMPONENTEN IN FLÜSSIGER ODER GASFÖRMIGER PHASE.

(30) Priorität: **23.07.85 DE 3526348**

(43) Veröffentlichungstag der Anmeldung:
**12.08.87 Patentblatt 87/33**

(45) Bekanntmachung des Hinweises auf die Patenterteilung:
**30.05.90 Patentblatt 90/22**

(84) Benannte Vertragsstaaten:
**AT BE CH DE FR GB IT LI LU NL SE**

(56) Entgegenhaltungen:
**GB-A-1 316 144**
**GB-A-2 017 400**
**US-A-3 337 497**
**US-A-3 400 145**

**Journal of Applied Physics, Band 51, Nr. 9, September 1980 (US) M. Aktik et al.: "A new polymer insulated gate field-effect transistor", Seiten 5055-5057.**

(73) Patentinhaber: **FRAUNHOFER-GESELLSCHAFT ZUR FÖRDERUNG DER ANGEWANDTEN FORSCHUNG E.V.**
**Leonrodstrasse 54**
**D-8000 München 19 (DE)**

(72) Erfinder: **SCHMIDT, Helmut**
**Tilman-Riemenschneider-Strasse 15**
**D-8706 Höchberg (DE)**
Erfinder: **HUTTER, Frank**
**Randersackererstrasse 81**
**D-8700 Würzburg (DE)**
Erfinder: **HAAS, Karl-Heinz**
**Franz-Leopold-Schecherstrasse 9**
**D-8701 Theilheim (DE)**
Erfinder: **OBERMEIER, Ernst**
**Allgäuer Strasse 106**
**D-8950 Kaufbeuren (DE)**
Erfinder: **STEGER, Ulrich**
**Im Wiesmat 7**
**D-8000 München 60 (DE)**
Erfinder: **ENDRES, Hanns-Erik**
**Am Stiftsbogen 148**
**D-8000 München 70 (DE)**
Erfinder: **DROST, Stephan**
**Haidelweg 24**
**D-8000 München 60 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 231 305 B1

(74) Vertreter: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**D-8000 München 40 (DE)**

## Beschreibung

Die Erfindung betrifft Sensoren für die selektive Bestimmung von Komponenten in flüssiger oder gasförmiger Phase; insbesondere bezieht sich die Erfindung auf Feldeffekttransistoren und Kondensatoren zur qualitativen oder quantitativen Bestimmung von Analyten (Moleküle, Ionen, etc.) in Flüssigkeiten oder Gasen.

Bei einem MOS-Feldeffekttransistor (Metal Oxide Semiconductor Field Effect Transistor; MOSFET), von dem eine Ausführungsform in Fig. 1 schematisch dargestellt ist, ist die Gateelektrode (z.B. Aluminium) durch einen ein- oder mehrschichtigen Gateisolator (z.B. Siliciumdioxid) vom Halbleiter (z.B. Silicium) getrennt. Die Spannung $U_G$ am Gate steuert den Stromfluß zwischen Drain- und Sourceelektrode.

Man unterscheidet zwischen n-Kanal und p-Kanal-Transistoren:

—Bei n-Kanal-Transistoren fließen Elektronen vom Sourcegebiet in das Draingebiet. Die Drainelektrode ist auf einem höheren Potential als die Sourceelektrode.

—Bei p-Kanal-Transistoren fließen "Löcher" vom Sourcegebiet in das Draingebiet. Die Sourceelektrode ist auf einem höheren Potential als die Drainelektrode.

Desweiteren trennt man die Transistoren nach Verarmungs- und Anreicherungstyp:

—Transistoren vom Verarmungstyp—auch Depletion-Transistoren genannt—leiten bereits bei einer Gatespannung von 0 V.

—Transistoren vom Anreicherungstyp—auch als Enhancement-Transistoren bezeichnet—haben keinen Stromfluß bei einer Gatespannung von 0 V.

Im folgenden werden anhand des Beispiels eines n-Kanal FET und unter Bezug auf Fig. 2 zwei Betriebszustände (a) sperrend; b) leitend) diskutiert:

a) Die Spannung $U_G$ an der Gateelektrode ist kleiner als die Schwellenspannung $U_{th}$ (Thresholdspannung): $U_G<U_{th}$ Die Source- und Draingebiete (n-Silicium) besitzen als bewegliche Majoritätsträger Elektronen, der Halbleiter dazwischen (p-Silicium) Löcher. Da immer einer der beiden pn-Übergänge in Sperrichtung gepolt ist, fließt bei diesem Betriebszustand kein Strom.

b) Die Gatespannung ist größer als die Thresholdspannung: $U_G>U_{th}$

Das Gate ist soweit positiv geladen, daß eine Inversionsschicht aus Elektronen an der Grenzschicht Halbleiter/Isolator entsteht. Unter dem Gate hat sich somit ein Kanal gebildet, so daß sich nun Elektronen vom Sourcegebiet durch diesen Kanal unter der Gateelektrode zum Drain bewegen können. Je positiver die Gatespannung ist, desto mehr Elektronen befinden sich im Kanal und desto größer ist der Stromfluß.

Die einfachsten Formeln für einen n-Kanal FET lauten (Stromfluß ab $U_G>U_{th}$), wobei man zwischen Triodenbereich und Sättigungsbereich (siehe Fig. 3) zu unterscheiden hat:

Triodenbereich:

$U_D<U_{D\ sat}=U_G-U_{th}$

$$I_D=\frac{\mu W \varepsilon_{Is}}{L d_{Is}}\left(U_G-U_{th}-\frac{U_D}{2}\right)U_D \qquad (1)$$

Sättigungsbereich:

$U_D>U_{D\ sat}=U_G-U_{th}$

$$I_D=\frac{\mu W \varepsilon_{Is}}{L d_{Is}}\,\frac{(U_G-U_{th})^2}{2} \qquad (2)$$

Der Drainstrom $I_D$ hängt also von folgenden Größen ab:

$\mu$: Beweglichkeit der Ladungsträger im Kanal

Je höher die Beweglichkeit ist, desto höher ist der Strom. Da Elektronen eine höhere Beweglichkeit als Löcher besitzen, führt ein n-Kanal MOSFET bei sonst gleichen Parametern mehr Strom als ein p-Kanal MOSFET.

W: Weite des Kanal

Je größer die Weite des Kanals ist, desto größer ist der Stromfluß.

L: Länge des Kanals

Je kleiner L ist, d.h. je geringer der Abstand zwischen Sourcegebiet und Draingebiet ist, desto größer ist bei einer gegebenen Spannung $U_D$ das elektrische Feld zwischen Drain und Source und desto größer der Strom.

Für einen hohen Strom muß somit das Verhältnis W/L groß sein.

$C_{Is}$: Isolatorkapazität pro Flächeneinheit:

$$C_{Is}=\varepsilon_{Is}/d_{Is} \qquad (3)$$

$\varepsilon_{Is}$: Dielektrizitätskonstante des Gateisolators

$d_{Is}$: Dicke des Gateisolators

Mit abnehmender Isolatordicke ergibt sich eine höhere Isolatorkapazität, so daß sich bei gleicher Gatespannung eine größere Ladung im Kanal befindet, also ein größerer Strom fließt.

Andererseits ist die Isolatorkapazität proportional zur Dielektrizitätskonstante des Gateisolators, so daß sich bei Verwendung von Siliciumnitrid anstelle von Siliciumdioxid als Isolator ein höherer Strom einstellt.

$U_G$:Gatespannung

Der Strom wächst mit steigender Gatespannung.

$U_{th}$: Thresholdspannung

Bei $U_G>U_{th}$ fließt bei einem n-Kanal FET ein Strom.

$U_D$: Drainspannung

Der Strom nimmt mit steigender Drainspannung zu, erreicht aber für $U_D>U_{D\ sat}$ einen Sättigungswert.

Die Thresholdspannung $U_{th}$ setzt sich aus folgenden Anteilen zusammen:

$$U_{th}=\Phi_m-\Phi_{si}-\frac{Q_{is}}{C_{is}}-\frac{Q_b}{C_{is}}+2\Phi_p \quad (4)$$

$\Phi_m-\Phi_{si}$: Differenz der Austrittsarbeiten von Metall (Gateelektrode) und Silicium

$Q_{is}$: Ladung im Gateisolator pro Flächeneinheit

Das Siliciumdioxid enthält abhängig vom Herstellungsprozeß positive Ladungen. Je mehr positive Ladungen im Oxid sind, umso weniger positive Ladungen müssen auf das Gate gebracht werden, damit ein bestimmter Strom fließt; $U_{th}$ ist somit geringer.

$Q_b$: Ladung der ionisierten Dotieratome in der Verarmungszone pro Flächeneinheit.

Die Größe von $Q_b$ hängt von der Dotierung des Siliciums und der Spannung am Substratanschluß $U_B$ ab.

$$Q_b=-\sqrt{2\,\varepsilon_{si}\,N_A\,e\,(2\Phi_p-U_B)} \quad (5)$$

$\varepsilon_{si}$: Dielektrizitätskonstante des Siliciums
$N_A$: Dichte der Dotieratome (Akzeptoren)
e: Elementarladung

$2\Phi_p$: Bandverbiegung im Silicium, die zur Erzeugung einer Inversionschicht nötig ist.

$$2\Phi_p=2\frac{kT}{e}\ln(N_A/n_i) \quad (6)$$

k: Boltzmannkonstante
T: absolute Temperatur
$n_i$: Ladungsträgerdichte bei Eigenleitung

Die Gatespannung, bei der keine Bandverbiegung und damit keine Raumladungszone ($Q_b=0$) existiert, nennt man die Flachbandspannung $U_{fb}$.

$$U_{fb}=\Phi_m-\Phi_{si}-\frac{Q_{is}}{C_{is}} \quad (7)$$

In den Gleichungen für den Drainstrom und die Thresholdspannung gibt es einige Größen, die sich nicht von Analyten (z.B. Gasen oder von Ionen, die sich in einer Flüssigkeit befinden) beeinflußen lassen. Dies sind die Halbleiterparameter wie die Beweglichkeit $\mu$, die Austrittsarbeit des Halbleiters $\Phi_{si}$ und die Dotierung (und damit $Q_b$ und $2\Phi_p$) sowie die geometrischen Abmessungen W und L.

Dagegen ist es bei folgenden Parametern theoretisch denkbar, daß sie zur Bestimmung der Anwesenheit und Konzentration eines Analyten herangezogen werden können:

—Isolatorkapazität $C_{is}=\varepsilon_{is}/d_{is}$
(im Vordergrund steht hierbei eine Änderung der Dielektrizitätskonstante $\varepsilon_{is}$).

—Austrittsarbeit $\Phi_m$ des Metalls oder einer anderen elektrisch leitenden Gateelektrode

—Ladung im Isolator $Q_{is}$

Wie aus Gleichung 4 ersichtlich, wirkt sich eine Änderung von $\Phi_m$ oder $Q_{is}$ auf die Thresholdspannung $U_{th}$ aus. Eine Änderung von $\varepsilon_{is}$ beeinflußt den Drainstrom $I_D$ sowohl direkt (Gleichungen 1 und 2) als auch indirekt über die Thresholdspannung (Gleichung 4).

In der Praxis unterscheiden sich die Sensoren nach dem Arbeitsmedium (gasförmig oder flüssig). Für die Messung in Flüssigkeiten wird z.B. der in Fig. 4 dargestellte ISFET (Ion-Sensitive Field Effect Transistor) angewandt. Meßbare Größen sind z.B. der pH-Wert (Gateisolator aus $Si_3N_4$) und die Konzentration von Ionen wie $Na^+$, $K^+$ oder $Ca^{++}$ (ionensensitive Schicht zusätzlich über dem Gateisolator). Der ISFET arbeitet nach folgendem Prinzip: An der Grenze zwischen Lösung und Gateisolator bzw. ionensensitiver Schicht stellt sich eine Potentialdifferenz in Abhängigkeit vom pH-Wert bzw. der Ionenkonzentration ein (Nernst-Spannung). Diese Potentialdifferenz wirkt als Verschiebung der Thresholdspannung.

Das bekannteste Beispiel für einen Sensor zur Messung in Gasen ist der in Fig. 5 schematisch dargestellte MOSFET mit Palladium-Gatemetall, der eine Detektion von Wasserstoff bzw. wasserstoffhaltigen Gasen ermöglicht. Die Wasserstoffmoleküle aus dem Gas lagern sich hierbei an der Palladiumoberfläche an und dissoziieren zu atomarem Wasserstoff. Dieser wandert durch die Palladiumschicht und baut an der Phasengrenze Palladium/$SiO_2$ eine Dipolschicht auf, die die Austrittsarbeit der Palladium-Gateelektrode und damit die Thresholdspannung verändert.

Aus der GB—A—20 17 400 ist ein FET zur selektiven Bestimmung chemische, Eigenschaften und, eine Referenz-Elektrode in Form eines FET bekannt, die im Gate-Bereich eine hydrophobe Membran, z.B. aus einem Polysiloxan, aufweist. In J. of Appl. Phys., Band 51, Nr. 9, September 1980, (US); M. Aktik et al.: "A new polymer insulated gate field-effect transistor", Seiten 5055—5057, werden Untersuchungen der Polymer-Silicium-Grenzfläche anhand eines FET durchgeführt, der eine Gate-Isolatorschicht aus plasmapolymerisiertem Siloxan aufweist.

Ziel der Erfindung ist es, Sensoren für die selektive Bestimmung vom Komponenten in flüssiger oder gasförmiger Phase bereitzustellen, die nicht auf die Detektion eines einzigen Analyten beschränkt sind, sondern durch geringfügige Modifikation die spezifische Detektion einer Vielzahl von Analyten ermöglichen, wodurch nicht nur eine leichte Anpassung an unterschiedliche Problemstellungen, sondern auch eine fertigungstechnische Vereinfachung erzielt wird.

Es wurde nun gefunden, daß die chemische Stoffgruppe der Heteropolysiloxane mit Analyten (z.B. Gasmolekülen, gelösten ionischen Spezies etc.) eine Wechselwirkung eingeht, welche

die elektrischen Eigenschaften des Heteropolysiloxans (z.B. Dielektrizitätskonstante, spezifische Leitfähigkeit etc.) meßbar ändert. Bei Verwendung der Heteropolysiloxane in elektrischen Sensoren (z.B. Feldeffekttransistoren oder Kondensatoren) ist es somit möglich, anhand der Änderung der elektrischen Eigenschaften des Heteropolysiloxans Aussagen über die Anwesenheit oder Konzentration bestimmter Analyten zu gewinnen. Durch geeignete Funktionalisierung des Heteropolysiloxans (z.B. Einbau von funktionellen Gruppen) gelingt es, die erforderliche Spezifität und Selektivität für den zu bestimmenden Analyten einzustellen.

Dementsprechend betrifft die vorliegende Erfindung nach einer Ausführungsform einen Sensor zur selektiven Bestimmung von Komponenten in flüssiger oder gasförmiger Phase in Form eines Feldeffekttransistors, umfassend ein Halbleitersubstrat; an der Oberfläche des Halbleitersubstrats mindestens zwei durch einen Kanal getrennte Drain- und Sourcegebiete mit einem dem Halbleitersubstrat entgegengesetzten Dotierungstyp; mit diesen Drain- und Sourcegebieten in elektrisch leitendem Kontakt stehende Drain- und Sourceelektroden; auf dem Kanal eine Gateisolatorschicht; auf der Gateisolatorschicht eine sensitive Schicht aus einem Heteropolysiloxan, wobei die sensitive Schicht mit den zu bestimmenden Komponenten in Kontakt ist, und eine Gate- oder Referenz-Elektrode.

Nach einer anderen Ausführungsform betrifft die Erfindung einen kapazitiven Sensor zur selektiven Bestimmung von Komponenten in flüssiger oder gasförmiger Phase, umfassend zwei oder mehr Elektroden und ein oder mehrere Dielektrika zwischen diesen Elektroden, wobei mindestens ein Dielektrikum aus einem Heteropolysiloxan besteht und mit den zu bestimmenden Komponenten in Kontakt ist.

Entsprechend einer weiteren Ausführungsform betrifft die Erfindung eine Anordnung zur gleichzeitigen Bestimmung mehrerer Komponenten in flüssiger oder gasförmiger Phase, umfassend mehrere Sensoren der oben genannten Art mit unterschiedlicher, selektiver Empfindlichkeit für die jeweils zu bestimmenden Komponenten.

Im folgenden wird die Erfindung anhand bevorzugter Ausführungsformen unter Bezug auf die Zeichnungen näher erläutert. In der Zeichnung zeigen:

Fig. 1 eine schematische Darstellung eines herkömmlichen Feldeffekttransistors;

Fig. 2 zwei Betriebszustände des Feldeffekttransistors von Fig. 1, nämlich a) sperrend und b) leitend;

Fig. 3 die Eingangs- und Ausgangskennlinien eines n-Kanal-Feldeffekttransistors;

Fig. 4 einen schematischen Querschnitt durch einen ionensensitiven Feldeffekttransistor zur Messung in Flüssigkeiten;

Fig. 5 einen schematischen Querschnitt durch einen Feldeffekttransistor mit Palladium-Gatemetall zur Messung in wasserstoffhaltigen Gasen;

Fig. 6a eine Ausführungsform eines erfindungsgemäßen Feldeffekttransistors mit einer Heteropolysiloxanschicht und einer Gatemetallschicht aus dünnem Gold (100 Å);

Fig. 6b eine andere Ausführungsform eines erfindungsgemässen Feldeffekttransistors mit einer Heteropolysiloxanschicht und einer Gatemetallschicht aus Aluminium in Mäanderform;

Fig. 7a einen schematischen Querschnitt durch eine Ausführungsform eines erfindungsgemäßen kapazitiven Sensors;

Fig. 7b eine schematische Draufsicht auf den kapazitiven Sensor von Fig. 7a;

Fig. 7c das elektrische Ersatzschaltbild des kapazitiven Sensors von Fig. 7a;

Fig. 8 ein Schaltbild der Ankoppelung eines kapazitiven Sensors an einen Feldeffekttransistor;

Fig. 9 den zeitlichen Verlauf der Kapazität eines Sensors gemäß Fig. 7 bei Änderung der Zusammensetzung der Gasatmosphäre;

Fig. 10 die relative Kapazitätsänderung von Sensoren gemäß Fig. 7, die mit verschiedenen aminogruppenhaltigen Heteropolysiloxanen beschichtet sind, in Abhängigkeit vom $SO_2$-Gehalt der Atmosphäre;

Fig. 11 die Abhängigkeit der Kapazität zweier Sensoren gemäß Fig. 7 von der relativen Feuchte bei 20°C in $N_2$-Atmosphäre bzw. $CO_2$-Atmosphäre;

Fig. 12 das Meßprotokoll eines Sensors gemäß Fig. 7 mit $CuCl_2$-haltiger Heteropolysiloxanschicht bei der Bestimmung von $CO_2$;

Fig. 13 die Ausgangskennlinienfelder eines erfindungsgemäßen Feldeffekttransistors mit einer Gatemetallschicht aus Aluminium in Mäanderform und mit einer $CuCl_2$-haltigen HPS-Schicht beschichtet in $NO_2$/synthetischer Luft und in $N_2$; und

Fig. 14 die Ausgangskennlinienfelder eines erfindungsgemäßen Feldeffekttransistors mit einer Gatemetallschicht aus Aluminium in Mäanderform und mit einer $CuCl_2$-haltigen HPS-Schicht beschichtet in $NH_3/N_2$ und in $N_2$.

Die erfindungsgemäßen Sensoren können zur Detektion beliebiger Analyten in flüssiger oder gasförmiger Phase eingesetzt werden. Zur Vereinfachung wird in der folgenden Beschreibung nur auf Gassensoren Bezug genommen, jedoch ist die Erfindung nicht auf diese Ausführungsformen beschränkt, sondern kann mit geeigneten, dem Fachmann keine Schwierigkeiten bereitenden Modifikationen z.B. zur Detektion von neutralen oder ionischen Analyten in flüssigen Medien angewandt werden. Zu diesem Zweck eignet sich z.B. der in Fig. 4 dargestellte ISFET mit einer erfindungsgemäßen HPS-Schicht als ionenselektiver Schicht.

Der in Fig. 6 schematisch dargestellte erfindungsgemäße Feldeffekttransistor (im folgenden: FET) weist auf einem Halbleitersubstrat (z.B. p-Si) $n^+$-dotierte Drain- bzw. Sourcegebiete auf, die zwischen sich einen Kanal definieren. Über dem Kanal befindet sich eine Gateisolatorschicht mit einer Dicke von z.B. 20 bis 1000 nm, vorzugsweise 30 bis 200 nm. Die Gateisolatorschicht kann ein- oder mehrschichtig sein und besteht vorzugsweise aus $SiO_2$ oder $Si_3N_4$.

Auf die Gateisolatorschicht ist die sensitive

Schicht aus einem Heteropolysiloxan (im folgenden: HPS) aufgebracht. Diese sensitive Schicht hat eine Dicke von z.B. 10 bis 1000 nm, vorzugsweise 100 bis 500 nm.

In der in Fig. 6 gezeigten Ausführungsform eines erfindungsgemäßen FET ist über der HPS-Schicht eine Gateelektrode vorgesehen. Eine derartige Gateelektrode hat sich bei Gassensoren als notwendig erwiesen, um ein definiertes Gatepotential zu erhalten, das Voraussetzung für stabile und reproduzierbare Ergebnisse ist. Allerdings muß die Gateelektrode in der abgebildeten Ausführungsform für den zu bestimmenden Analyten (z.B. das Gas) durchlässig sein. Dies wird bei der in Fig. 6a gezeigten Ausführungsform durch eine sehr dünne (z.B. 5 bis 20 nm) Goldschicht erreicht. In Fig. 6b ist ein alternativer Lösungsweg gezeigt, nämlich die Verwendung einer dickeren Gateelektrode (z.B. aus Aluminium), die durch ihre physikalische Form (z.B. Perforationen oder mäanderartige Struktur) den Durchtritt des zu bestimmenden Gases ermöglicht.

Die Funktionsweise des erfindungsgemäßen FET-Gassensors beruht darauf, daß Gasmoleküle im adsorbierten Zustand eine elektrische Wirkung aufgrund von Dipolmomenten ausüben. Ausschlaggebend ist nicht das Dipolmoment des freien Gasmoleküls, sondern wie sich das Dipolmoment eines Moleküls der Sensorschicht ändert, wenn sich ein Gasmolekül anlagert. Dabei muß unterschieden werden, ob das Gas in die HPS-Schicht eindringen kann oder nicht, d.h. ob eine dichte oder poröse HPS-Schicht vorliegt. Bei dichten HPS-Schichten kann es aufgrund der Anlagerung von Dipolen auf der Schicht zu einer Veränderung von $Q_{is}$, d.h. der Größe, die die effektive Ladung im Gateisolator repräsentiert kommen. Bei einer porösen HPS-Schicht können die Gasmoleküle in die Poren der Schicht eindringen, so daß zusätzlich die Dielektrizitätskonstante geändert wird, die unter anderem von der Zahl an vorhandenen Dipolen abhängig ist. Eine weitere Möglichkeit ist eine Änderung der elektrischen Leitfähigkeit der HPS-Schicht auf dem Gate durch Wechselwirkung mit dem Analyten. Diese Leitfähigkeitsänderung läßt sich mittels zweier anstelle nur eine Gateelektrode oder mittels Wechselspannung anstelle einer Gleichspannung am Gate nutzen.

Bei Verwendung eines FET mit Gateelektrode kann zu den geschilderten elektrischen Effekten in der HPS-Schicht noch die Änderung der Austrittsarbiet des Gatemetalls aufgrund der angelagerten Dipole als zusätzliche Einflußgröße hinzukommen. Die genannten Einflußgrößen bewirken eine Änderung der Thresholdspannung und damit des Drainstromes bei konstanter Drain-Source-Spannung, so daß eine quantitative Bestimmung des Gases mit kurzen Ansprechzeiten möglich ist.

Die durch die Adsorption von Gasmolekülen hervorgerufene Änderung der Dielektrizitätskonstante kann auch mit den erfindungsgemäßen kapazitiven Sensoren erfaßt werden, die ein HPS-Dielektrikum aufweisen. Für diese kapazitiven Sensoren sind beliebige konstruktive Ausgestaltungen denkbar. Beispielsweise kann ein Plattenkondensator mit folgendem Schichtaufbau angewandt werden: Silicium/Siliciumdioxid/HPS/Metall (MIS-Struktur). Um den Zutritt des Meßgases zu der HPS-Schicht zu erleichtern, kann zwischen dem Metall und der HPS-Schicht ein Luftspalt vorgesehen werden. Dieser ist jedoch weniger bevorzugt und erübrigt sich, wenn eine gasdurchlässige Metallschicht angewandt wird.

In Fig. 7 ist ein bevorzugte Ausführungsform eines erfindungsgemäßen kapazitiven Sensors dargestellt. Um ein planare Struktur zu erreichen, sind die Elektroden als Interdigitalstruktur ausgeführt. Diese umfaßt z.B. auf ein Keramiksubstrat aufgedampfte Elektrodenpaare aus Aluminium, wobei jede Elektrode z.B. aus 60 Fingern mit einer Höhe von 1 µm und einer Breite von 20 µm mit einem Fingerabstand von 20 µm besteht. Auf und zwischen den fingerförmigen Elektroden befindet sich eine dünne HPS-Schicht als Dielektrikum

In Fig. 7c ist das elektrische Ersatzschaltbild dieser Kondensatorstruktur wiedergegeben. Es besteht aus einem Leitwert, der durch die nichtidealen Isolatoreigenschaften der HPS-Schicht zustande kommt, den beiden Streukapazitäten $C_{Luft}$ und $C_{Substrat}$ sowie der Serien- bzw. Parallelschaltung von 3 Kapazitäten mit der HPS-Schicht als Dielektrikum, die unter Gasatmosphäre ihren Wert ändern können.

Die durch Adsorption von Gasmolekülen erfolgende Kapazitätsänderung kann z.B. dadurch gemessen werden, daß man den Kondensator in einen Schwingkreis schaltet, in dem die Kapazitätsänderung eine Änderung der Frequenz eines Oszillators hervorruft.

Eine andere Möglichkeit ist die in Fig. 8 dargestellte Ankoppelung des Kondensators an einen herkömmlichen FET. Hier-zu wird eine Elektrode des Kondensators mit der Gateelektrode des FET elektrisch leitend verbunden. Die zweite Elektrode des Kondensators wird mit einer Gleichspannung beaufschlagt, die von einer Wechselspannung überlagert ist. Bei konstanter Drain-Source-Spannung läßt sich dann die Gaskonzentration anhand der Änderung von Amplitude und Phase des Wechselstromanteils des Drainstromes bestimmen.

Zur gleichzeitigen Bestimmung mehrerer Komponenten können erfindungsgemäß Meßanordnungen angewandt werden, die zwei oder mehr FET-Sensoren und/oder kapazitive Sensoren mit jeweils unterschiedlicher Empfindlichkeit für die verschiedenen zu bestimmenden Komponenten aufweisen. Beispielsweise können auf einem einzigen Chip Gassensoren und Feuchtigkeitssensoren angeordnet sein. Diese Meßanordnung ermöglicht eine Kompensation des Einflusses von Feuchtigkeit auf die durch die Gasmoleküle hervorgerufenen Änderungen der elektrischen Eigenschaften der Sensorschicht. Durch gleichzeitige Verwendung mehrerer Sensoren kann z.B. auch eine Gesamtbestimmung mehrerer Komponenten neben einer oder mehreren Einzelbestimmungen durchgeführt werden, wobei sich die Konzentration der anderen Komponenten aus einer Differenzberechnung ergibt.

Die erfindungsgemäß als Sensorschichten verwendeten Heteropolysiloxane (HPS) sind organisch modifizierte Silikate. Die Modifizierung erfolgt hierbei in erster Linie durch Einbau geeigneter funktioneller Gruppen und durch die Umsetzung mit anderen, ebenfalls hydrolisierbaren und kondensierbaren Metallverbindungen. Durch diese Modifizierung entstehen Oberflächenstellen (Adsorptionszentren), die die gewünschte selektive Wechselwirkung mit Analyten (z.B. Gasmolekülen) ermöglichen.

So reagieren z.B. HPS-Schichten mit primären Aminogruppen in ihren elektrischen Eigenschaften deutlich auf $H_2O$, HCl und $NH_3$ sowie geringfügig aus $SO_2$ und $CO_2$ (besonders in feuchter Atmosphäre). HPS-Schichten mit tertiären Aminogruppen zeigen einen vom $SO_2$-Gehalt der Gasatmosphäre abhängigen Kapazitätsanstieg und $CuCl_2$-haltige Cyanopropyl-HPS-Schichten erhöhen ihre Kapazität in Abhängigkeit vom $CO_2$-Partialdruck.

In Fig. 9 ist der zeitliche Verlauf der Kapazität einer Interdigitalstruktur gemäß Fig. 7, die ein Kondensat von N,N-Dimethyl-3-aminopropyltrimethoxysilan (NND) als Dielektrikum aufweist, bei Änderung des $SO_2$-Gehalts der Gasatmosphäre wiedergegeben.

In ähnlicher Weise zeigt Fig. 10 die Abhängigkeit der relativen Kapazitätsänderung von Interdigitalstrukturen gemäß Fig. 7 vom $SO_2$-Gehalt der Atmosphäre (20°C) . Als Dielektrika werden hierbei Kondensate von verschiedenen aminogruppenhaltigen HPS verwendet, nämlich von 3-Aminopropyltriethoxysilan (AMO), Aminophenyltrimethoxysilan (AMP), N-Methyl-3-aminopropyltrimethoxysilan (NMA), N,N-Dimethyl-3-aminopropyltrimethoxysilan (NND) und N,N-Diethyl-3-aminopropyltrimethoxysilan (NNDE). Hierbei zeigt sich, daß der Einfluß von $SO_2$ bei den HPS mit tertiären Aminogruppen (NMD und NMDE) am deutlichsten ist.

Die relative Kapazitätsänderung ΔC/C errechnet sich nach folgender Formel:

$$\Delta C/C = \frac{C(SO_2) - C(N_2)}{C(N_2)}$$

$C(N_2)$: Kapazität in reinem Stickstoff
$C(SO_2)$: Kapazität in $SO_2$-haltigem Stickstoff

In Fig. 11 ist die Abhängigkeit der Kapazität zweier Interdigitalstrukturen gemäß Fig. 7 von der relativen Feuchte bei 20°C in $N_2$-Atmosphäre bzw. $CO_2$-Atmosphäre dargestellt. Als Dielektrika dienen ein Kondensat von AMO bzw. ein Mischkondensat von AMO und Tetraethoxysilan (TEOS). Bei beiden HPS-Dielektrika ist die Kapazität der Interdigitalstruktur deutlich vom $H_2O$-Partialdruck abhängig, wobei das reine AMO-Kondensat aufgrund seines höheren Anteils an polaren $NH_2$-Gruppen empfindlicher auf Veränderungen des $H_2O$-Partialdruckes reagiert.

Fig. 12 zeigt das Meßprotokoll einer Interdigitalstruktur gemäß Fig. 7 mit der $CuCl_2$-haltigen Beschichtung aus Beispiel 4 bei der Bestimmung von $CO_2$ (21°C). Die angegebenen Prozentzahlen bezeichnen den Volumenanteil an $CO_2$ in der Gasatmosphäre. In den nicht näher bezeichneten Zeitintervallen strömt reiner Stickstoff durch die Apparatur.

Fig. 13 zeigt die Ausgangskennlinienfelder eines FET mit einer Gatemetallschicht aus Aluminium in Mäanderform und mit einer $CuCl_2$-haltigen HPS-Schicht beschichtet, die in einer Atmosphäre von 5% $NO_2$ in synthetischer Luft bzw. in $N_2$ gemessen wurden. Der Absolutwert des Drainstromes vergrößert sich bei Beaufschlagung des Sensors mit $NO_2$. Die Kennlinien wurden an einem p-Kanal-Transistor gemessen.

Fig. 14 zeigt die Ausgangskennlinienfelder eines FET mit einer Gatemetallschicht aus Aluminium in Mäanderform und mit einer $CuCl_2$-haltigen HPS-Schicht beschichtet, die in einer Atmosphäre von 4% $NH_3$ in $N_2$ bzw. in $N_2$ gemessen wurden. Der Einfluß des nachzuweisenden Gases, nämlich $NH_3$, zeigt sich in einer Vergrößerung des Absolutwertes des Drainstromes des p-Kanal FET.

Eine für die erfindungsgemäßen Sensoren besonders bevorzugte Gruppe von Heteropolysiloxanen wird erhalten durch Hydrolyse und Polykondensation von

a) mindestens einem organofunktionellen Silan der allgemeinen Formel I

$$SiR'_bX_c(R''Y)_{(4-b-c)} \qquad (I)$$

in der R' Alkyl, Alkenyl, Aryl, Aralkyl oder Alkylaryl bedeutet, X Wasserstoff, Halogen, Alkoxy, Acyloxy oder $-NR_2$ (R=Wasserstoff und/oder Alkyl) darstellt, R'' geradkettiges oder verzweigtes Alkylen, das durch Sauerstoff- oder Schwefelatome oder —NH— Gruppen unterbrochen sein kann, Phenylen, Alkylphenylen oder Alkylenphenylen darstellt, Y Halogen oder eine gegebenenfalls alkylsubstituierte Amino-, gegebenenfalls alkylsubstituierte Anilino- Aldehyd-, Alkylcarbonyl-, Arylcarbonyl-, Carboxy-, Hydroxy-, Mercapto-, Cyano-, Hydroxyphenyl-, Diazo-, Carbonsäurealkylester-, Sulfonsäure- ($SO_3H$), Phosphorsäure- ($PO_3H_2$), Phosphino-, Dialkylphosphino-, Diarylphosphino-, Alkylarylphosphino-, Imidazolino-, 4,5-Dihydroimidazolino-, Pyridino- oder Epoxygruppe bedeutet, b den Wert 0, 1 oder 2, c den Wert 1, 2 oder 3 und (b+c) den Wert 1, 2 oder 3 haben;

b) gegebenenfalls mindestens einem siliciumfunktionellen Silan der allgemeinen Formel II

$$SiX_4 \qquad (II)$$

in der X die vorstehende Bedeutung hat, jedoch nicht alle Reste X Wasserstoff sind;

c) gegebenenfalls mindestens einem Organosilan der allgemeinen Formel III

$$SiR'_aX_{(4-a)} \qquad (III)$$

in der X und R' die vorstehende Bedeutung haben und a den Wert 1, 2 oder 3 hat;

d) gegebenenfalls mindestens einem im Reaktionsmedium löslichen schwerflüchtigen Oxid oder mindestens einer im Reaktionsmedium löslichen, ein schwerflüchtiges Oxid bildenden Verbindung eines Elementes der Hauptgruppen Ia bis Va oder der Nebengruppen IVb oder Vb des Periodensystems; und

e) gegebenenfalls mindestens einer im Reaktionsmedium löslichen Metallverbindung, die eine Reaktion des Analyten katalysiert, und/oder einer im Reaktionsmedium löslichen organischen Verbindung, die mit dem Analyten eine chemische Reaktion eingeht;

gegebenenfalls in Gegenwart eines Kondensationskatalysators und/oder eines organischen Lösungsmittels.

Das auf diese Weise hergestellte Heteropolysiloxan enthält vorzugsweise, bezogen auf Oxideinheiten, 20 bis 100 Gewichtsprozent der Komponente a) und jeweils 0 bis 80 Gewichtsprozent der Komponenten b), c), d) und/oder e).

Diese und ähnliche Heteropolysiloxane sowie Verfahren zu ihrer Herstellung sind z.B. in den DE—OS 27 58 415 und 29 25 969 beschrieben. Bezüglich bevorzugter Produktzusammensetzungen und spezieller Beispiele für die Komponenten a) bis d) wird auf diese Patentveröffentlichungen verwiesen.

Als Komponenten e) eignen sich im Reaktionsmedium lösliche Metallverbindungen, z.B. von Elementen der Hauptgruppen IIIa und IVa sowie der Nebengruppen IVb bis einschließlich VIIIb und Ib des Periodensystems, die eine Reaktion des zu bestimmenden Analyten katalysieren und die gegebenenfalls zum Metall reduziert werden können. Fur die Bestimmung der Gase $O_2$, $NO_x$, CO sowie verschiedener Kohlenwasserstoffe sind z.B. Platingruppenmetalle und Verbindungen oder Komplexverbindungen dieser Metall besonders bevorzugt, z.B. $PtCl_2$, $Pd(NO_3)_2$, $Rh(NO_3)_3$ und die sogenannte Vaska-Verbindung

$$((C_6H_5)_3P)_2IrCl(CO).$$

Ebenfalls verwendbar als Komponenten e) sind im Reaktionsmedium lösliche organische Verbindungen, die mit dem Analyten eine Wechselwirkung eingehen können, z.B. eine Brönstedt-Säure-Base-Wechselwirkung, eine Elektronendonor-AkzeptorWechselwirkung oder eine chemische Reaktion, z.B. eine Redoxreaktion. Eine für den letztgenannten Reaktionstyp geeignete organische Verbindung ist z.B. Hydrochinon im Falle der Detektion von Sauerstoff.

Das zur Herstellung der HPS angewandte Verfahren wird als Sol-Gel-Prozeß bezeichnet. Ausgehend von flüssigen oder löslichen Ausgangsverbindungen erhält man durch die fortschreitende Kondensation Moleküle und Molekülaggregate mit wachsendem Molekulargewicht. Dies führt zu einer kolloidaldispersen Lösung (Sol), die sich durch weitere Kondensation zu einem amorphen Feststoff (Gel) als primärem Reaktionsprodukt verdichtet. Dieses kann dann gegebenenfalls noch nachbehandelt werden.

Das zur Hydrolyse stöchiometrisch erforderliche Wasser wird entweder zumindest teilweise dem Polykondensationssystem zugegeben oder aber vollständig aus der Luftfeuchtigkeit bezogen.

Die Herstellung von sensitiven HPS-Schichten kann auf verschiedene Weise erfolgen. Beispielsweise kann vom Lösungszustand der Ausgangsverbindungen ausgegangen werden, so daß dann der gesamte Sol-Gel-Prozeß in der Schicht abläuft. Auch im Sol-Zustand sind Beschichtungen durchführbar. Schließlich ist bei löslichen Gelen auch eine Auflösung des Produkts in einem organischen Lösungsmittel möglich, das dann als Lösung aufgetragen wird.

Im folgenden sind spezielle Beispiele für Beschichtungsmassen zur Herstellung von sensitiven HPS-Schichten angegeben.

Beispiel 1 ($NH_3$- und $H_2O$-sensitive Schichten)

2 ml 3-Aminopropyltriethoxysilan werden in 6 ml n-Butanol zusammen mit 0,23 ml Wasser gelöst und 2 Stunden bei Raumtemperatur gerührt. Die erhaltene Reaktionsmischung kann als Beschichtungsmasse für $NH_3$- und $H_2O$-sensitive Schichten verwendet werden.

Beispiel 2 ($CO_2$-sensitive Schichten)

2,5 ml 3-Aminopropyltriethoxysilan und 0,6 ml Tetraethoxysilan werden in 9,3 ml n-Butanol gelöst und 2 Stunden bei Raumtemperatur gerührt. Die erhaltene Reaktionsmischung kann als Beschichtungsmasse für $CO_2$-sensitive Schichten verwendet werden.

Beispiel 3 ($SO_2$-sensitive Schichten)

2,0 ml N,N-Dimethyl-3-aminopropyltrimethoxysilan oder 2 ml N,N-Diethyl-3-aminopropyltrimethoxysilan werden mit 0,25 ml Wasser in 6 ml n-Butanol gelöst und 2 Stunden bei Raumtemperatur gerührt. Die erhaltene Reaktionsmischung kann als Beschichtungsmasse für $SO_2$-sensitive Schichten verwendet werden.

Beispiel 4 ($CO_2$-empfindliche Schichten)

11,4 ml 3-Cyanopropyltrimethoxysilan werden in 34,2 ml n-Butanol zusammen mit 1,7 ml 1M Salzsäure gelöst. Zu dieser Lösung werden 319 mg Kupfer(II)-chlorid gegeben und gelöst. Die Reaktionsmischung wird 2 Stunden bei Raumtemperatur gerührt und kann dann als Beschichtungsmasse für $CO_2$-sensitive Schichten verwendet werden.

Das Aufbringen der Beschichtungsmassen erfolgt vorzugsweise nach der sogenannten Spinon-Technik (Abschleudern), wobei die Schichtdicke über die Drehzahl variiert werden kann. Im allgemeinen werden mit einer Drehzahl von etwa 1000 bis 2000 U/min die angestrebten Schichtdicken erhalten; es können jedoch auch Drehzahlen bis zu 10000 U/min angewandt werden.

Beispiel 5 (Herstellung eines HPS-beschichteten FET)

Auf die Gateisolatorschicht eines FET wird eine Beschichtungsmasse nach einem der Beispiele 1

bis 4 entweder als solche oder nach eventuellem Abtrennen des organischen Lösungsmittels aufgetragen und ausgehärtet. Beispielsweise kann man das beschichtete Substrat 6 Stunden bei Raumtemperatur staubgeschützt lagern und anschließend 16 Stunden bei erhöhter Temperatur, z.B. 120°C, aushärten.

Die erhaltene HPS-Schicht wird dann auf übliche Weise strukturiert, vorzugsweise durch naßchemisches Ätzen nach der Photoresist-Methode.

Auf die strukturierte HPS-Schicht wird das Gatemetall aufgebracht, z.B. durch Ausputtern einer dünnen Goldschicht.

Beispiel 6 (Herstellung eines HPS-beschichteten FET)

Auf die Gateisolatorschicht eines FET mit Gateelektrode aus Al in Mäanderform wird eine Beshichtungsmasse nach einem der Beispiele 1 bis 4 aufgetragen und in einer Lackschleuder abgeschleudert. Der Sensor wird dann 3 Stunden bei Raumtemperatur und 16 Stunden bei 120°C ausgehärtet.

Beispiel 7 (Herstellung eine kapazitiven Sensors)

Auf die Interdigitalstruktur gemäß Fig. 7 wird ein Tropfen einer Beschichtungsmasse gemäß einem der Beispiele 1 bis 4 aufgebracht und in einer Lackschleuder mit 2000 U/min abgeschleudert. Die Kondensatorstrukturen mit der dünnen HPS-Schicht auf bzw. zwischen den fingerförmigen Elektroden werden dann 16 Stunden in einem Temperofen bei 120°C ausgehärtet.

**Patentansprüche**

1. Sensor zur selektiven Bestimmung von Komponenten in flüssiger oder gasförmiger Phase in Form eines Feldeffekttransistors, umfassend ein Halbleitersubstrat; an der Oberfläche des Halbleitersubstrats mindestens zwei durch einen Kanal getrennte Drain- und Source-gebiete mit einem dem Halbleitersubstrat entgegengesetzten Dotierungstyp; mit diesen Drain- und Source-gebieten in elektrisch leitendem Kontakt stehende Drain- und Sourceelektroden; auf dem Kanal eine Gateisolatorschicht; auf der Gateisolatorschicht eine sensitive Schicht aus einem Heteropolysiloxan, wobei die sensitive Schicht mit den zu bestimmenden Komponenten in Kontakt ist; und eine Gate- oder Referenz-Elektrode.

2. Sensor nach Anspruch 1, dadurch gekennzeichnet, daß die Gateisolatorschicht eine Dicke von 30 bis 200 nm hat.

3. Sensor nach Anspruch 1, dadurch gekennzeichnet, daß die sensitive Schicht eine Dicke von 10 bis 1000 nm hat.

4. Sensor nach Anspruch 1, dadurch gekennzeichnet, daß die sensitive Schicht aus einem Heteropolysiloxan besteht, welches hergestellt worden ist durch Hydrolyse und Kondensation von

a) mindestens einem organofunktionellen Silan der allgemeinen Formel I

$$SiR'_bX_c(R''Y)_{(4-b-c)} \quad (I)$$

in der R' Alkyl, Alkenyl, Aryl, Aralkyl oder Alkylaryl bedeutet, X Wasserstoff, Halogen, Alkoxy, Acyloxy oder $-NR_2$ (R=Wasserstoff und/oder Alkyl) darstellt, R'' geradkettiges oder verzweigtes Alkylen, das durch Sauerstoff- oder Schwefelatome oder —NH— Gruppen unterbrochen sein kann, Phenylen, Alkylphenylen oder Alkylenphenylen darstellt, Y Halogen oder eine gegebenenfalls alkylsubstituierte Amino-, gegebenenfalls alkylsubstituierte Anilino-, Aldehyd-, Alkylcarbonyl-, Arylcarbonyl- Carboxy-, Hydroxy-, Mercapto-, Cyano-, Hydroxyphenyl-, Diazo-, Carbonsäurealkylester-, Sulfonsäure- ($SO_3H$), Phosphorsäure- ($PO_3H_2$), Phosphino-, Dialkylphosphino-, Diarylphosphino-, Alkylarylphosphino-, Imidazolino-, 4,5-Dihydroimidazolino-, Pyridino- oder Epoxygruppe bedeutet, b den Wert 0, 1 oder 2, c den Wert 1, 2 oder 3 und (b+c) den Wert 1, 2 oder 3 haben;

b) gegebenenfalls mindestens einem siliciumfunktionellen Silan der allgemeinen Formel II

$$SiX_4 \quad (II)$$

in der X die vorstehende Bedeutung hat, jedoch nicht alle Reste X Wasserstoff sind;

c) gegebenenfalls mindestens einem Organosilan der allgemeinen Formel III

$$SiR'_aX_{(4-a)} \quad (III)$$

in der X und R' die vorstehende Bedeutung haben und a den Wert 1, 2 oder 3 hat;

d) gegebenenfalls mindestens einem im Reaktionsmedium löslichen schwerflüchtigen Oxid oder mindestens einer im Reaktionsmedium löslichen, ein schwerflüchtiges Oxid bildenden Verbindung eines Elementes der Hauptgruppen Ia bis Va oder der Nebengruppen IVb oder Vb des Periodensystems; und

e) gegebenenfalls mindestens einer im Reaktionsmedium löslichen Metallverbindung, die eine Reaktion des Analyten katalysiert, und/oder einer im Reaktionsmedium löslichen organischen Verbindung, die mit dem Analyten eine chemische Reaktion eingeht;

gegebenenfalls in Gegenwart eines Kondensationskatalysators und/oder eines organischen Lösungsmittels.

5. Sensor nach Anspruch 1, dadurch gekennzeichnet, daß die Gateelektrode für die zu bestimmenden Komponenten durchlässig ist.

6. Sensor zur selektiven Bestimmung von Komponenten in flüssiger oder gasförmiger Phase, umfassend zwei oder mehr Elektroden und ein oder mehrere Dielektrika zwischen diesen Elektroden, wobei mindestens ein Dielektrikum als sensitive Schicht ausgebildet ist, aus einem Heteropolysiloxan besteht und mit den zu bestimmenden Komponenten in Kontakt ist.

7. Sensor nach Anspruch 6, dadurch gekennzeichnet, daß die Elektroden eine Interdigitalstruktur aufweisen.

8. Sensor nach Anspruch 6, dadurch gekennzeichnet, daß eine Elektrode des Sensors elektrisch leitend mit der Gateelektrode eines Feldeffekttransistors verbunden ist.

9. Sensor nach Anspruch 6, dadurch gekennzeichnet, daß das Dielektrikum aus einem Heteropolysiloxan besteht, welches hergestellt worden ist durch Hydrolyse und Kondensation von

a) mindestens einem organofunktionellen Silan der allgemeinen Formel I

$$SiR'_bX_c(R''Y)_{(4-b-c)} \quad (I)$$

in der R' Alkyl, Alkenyl, Aryl, Aralkyl oder Alkylaryl bedeutet, X Wasserstoff, Halogen, Alkoxy, Acyloxy oder $—NR_2$ (R=Wasserstoff und/oder Alkyl) darstellt, R'' geradkettiges oder verzweigtes Alkylen, das durch Sauerstoff- oder Schwefelatome oder —NH— Gruppen unterbrochen sein kann, Phenylen, Alkylphenylen oder Alkylenphenylen darstellt, Y Halogen oder eine gegebenenfalls alkylsubstituierte Amino-, gegebenenfalls alkylsubstituierte Anilino- Aldehyd-, Alkylcarbonyl-, Arylcarbonyl-, Carboxy-, Hydroxy-, Mercapto-, Cyano-, Hydroxyphenyl-, Diazo-, Carbonsäurealkylester-, Sulfonsäure- ($SO_3H$), Phosphorsäure- ($PO_3H_2$), Phosphino-, Dialkylphosphino-, Diarylphosphino-, Alkylarylphosphino-, Imidazolino-, 4,5-Dihydroimidazolino-, Pyridino-, oder Epoxygruppe bedeutet, b den Wert 0, 1 oder 2, c den Wert 1, 2 oder 3 und (b+c) den Wert 1, 2 oder 3 haben;

b) gegebenenfalls mindestens einem siliciumfunktionellen Silen der allgemeinen Formel II

$$SiX_4 \quad (II)$$

in der X die vorstehende Bedeutung hat, jedoch nicht alle Rest X Wasserstoff sind;

c) gegebenenfalls mindestens einem Organosilan der allgemeinen Formel III

$$SiR'_aX_{(4-a)} \quad (III)$$

in der X und R' die vorstehende Bedeutung haben und a den Wert 1, 2 oder 3 hat;

d) gegebenenfalls mindestens einem im Reaktionsmedium löslichen schwerflüchtigen Oxid oder mindestens einer im Reaktionsmedium löslichen, ein schwerflüchtiges Oxid bildenden Verbindung eines Elementes der Hauptgruppen Ia bis Va oder der Nebengruppen IVb oder Vb des Periodensystems; und

e) gegebenenfalls mindestens einer im Reaktionsmedium löslichen Metallverbindung, die eine Reaktion des Analyten katalysiert, und/oder einer im Reaktionsmedium löslichen organischen Verbindung, die mit dem Analyten eine chemische Reaktion eingeht;

gegebenenfalls in Gegenwart eines Kondensationskatalysators und/oder eines organischen Lösungsmittels.

10. Anordnung zur gleichzeitigen Bestimmung mehrerer Komponenten in flüssiger oder gasförmiger Phase, umfassend mehrere Sensoren nach Anspruch 1 mit unterschiedlicher, selektiver Empfindlichkeit für die jeweils zu bestimmenden Komponenten.

11. Anordnung zur gleichzeitigen Bestimmung mehrerer Komponenten in flüssiger oder gasförmiger Phase, umfassend mehrere Sensoren nach Anspruch 6 mit unterschiedlicher, selektiver Empfindlichkeit für die jeweils zu bestimmenden Komponenten.

12. Anordnung zur gleichzeitigen Bestimmung mehrerer Komponenten in flüssiger oder gasförmiger Phase, umfassend mehrere Sensoren nach Anspruch 8 mit unterschiedlicher, selektiver Empfindlichkeit für die jeweils zu bestimmenden Komponenten.

**Revendications**

1. Capteur destiné à la détermination sélective de composants en phase liquide ou gazeuse sous forme d'un transistor à effet de champ, comportant un substrat semi-conducteur; sur la surface du substrat semi-conducteur au moins deux zones de drain et de sources séparées par un canal, d'un type de dopage opposé à celui du substrat semi-conducteur; des électrodes de drain et de source qui sont en contact électriquement conducteur avec ces zones de drain et de source; une couche isolante de grille sur le canal; sur la couche isolante de grille une couche sensible en un hétéropolysiloxane, la couche sensible étant en contact avec les composants à déterminer; et une électrode de grille ou de référence.

2. Capteur selon la revendication 1, caractérisé en ce que la couche isolante de grille est d'une épaisseur de 30 à 200 nm.

3. Capteur selon la revendication 1, caractérisé en ce que la couche sensible est d'une épaisseur de 10 à 1000 nm.

4. Capteur selon la revendication 1, caractérisé en ce que la couche sensible se compose d'un hétéropolysiloxane, qui a été réalisé par hydrolyse et condensation de

a) au moins un silane à fonction organique de la formule générale I

$$SiR'_bX_c(R''Y)_{(4-b-c)} \quad (I)$$

dans laquelle R' est un alkyle, un alkényle, un aryle, un aralkyle ou un alkylaryle, X est l'hydrogène, un halogène, un alkoxy, un acyloxy ou $—NR_2$ (R=hydrogène et/ou alkyle) R'' est un alkylène à chaîne droite ou à chaîne ramifiée, qui peut être interrompu par des atomes d'oxygène ou de soufre ou des groupes —NH—, des phényles, un alkylphényle ou des alkylphényles, Y est un halogène ou éventuellement des groupes amino substitués alkyle, éventuellement des groupes anilino, aldéhyde, alkylcarbonyle, arylcarbonyle, carboxy, hydroxy, mercapto, cyano, hydroxyphényle, diazo, alkylester d'acide carbonique, acide sulfoné ($SO_3H$), acide phosphoreux ($PO_3H_2$), phosphino, dialkylphosphino, diarylphosphino, alkylarylphosphino, imidazolino, 4,5-dihydroimidazolino, pyridino ou epoxy substitués

alkyle, b vaut 0, 1 ou 2, c vaut 1, 2 ou 3 et (b+c) vaut 1, 2 ou 3;

b) éventuellement au moins un silane à fonction silicium de la formule générale II

$$SiX_4 \quad (II)$$

dans laquelle X a la signification précédente, mais où tous les radicaux X ne sont pas de l'hydrogène.

c) éventuellement au moins un organosilane de la formule générale III

$$SiR'_aX_{(4-a)} \quad (III)$$

dans laquelle X et R' ont la signification précédente et la valeur de a est 1, 2 ou 3;

d) éventuellement au moins un oxyde peu volatile soluble dans un milieu de réaction ou au moins une liaison, formant un oxyde peu volatile, soluble dans un milieu de réaction, d'un élément des groupes principaux Ia à Va ou des sous-groupes IVb ou Vb du système périodique; et

e) éventuellement au moins une liaison métallique soluble dans le milieu de réaction, qui catalyse une réaction des analytes et/ou une liaison organique soluble dans le milieu de réaction, qui entre dans une réaction chimique avec l'analyte;

éventuellement en présence d'un catalyseur de condensation et/ou d'un solvent organique.

5. Capteur selon la revendication 1, caractérisé en ce que l'électrode de grille est perméable au composant à déterminer.

6. Capteur destiné à la détermination sélective de composants en phase liquide ou gazeuse, comportant deux électrodes ou davantage et un ou plusieurs diélectriques entre ces électrodes, au moins un diélectrique étant réalisé comme couche sensible, en un hétéropolysiloxane et étant en contact avec les composants à déterminer.

7. Capteur selon la revendication 6, caractérisé en ce que les électrodes présentent une structure interdigitale.

8. Capteur selon la revendication 6, caractérisé en ce qu'une électrode du capteur est reliée de façon électriquement conductrice à l'électrode de grille d'un transistor à effet de champ.

9. Capteur selon la revendication 6, caractérisé en ce que le diélectrique consiste en un hétéropolysiloxane qui a été réalisé par hydrolyse et condensation de

a) au moins un silane à fonction organique de la formule générale I

$$SiR'_bX_c(R''Y)_{(4-b-c)} \quad (I)$$

dans laquelle R' est un alkyle, un alkényle, un aryle, un aralkyle ou un alkylaryle, X est l'hydrogène, un halogène, un alkoxy, un acyloxy ou —$NR_2$ (R=hydrogène et/ou alkyle) R'' est un alkylène à chaîne droite ou à chaîne ramifiée, qui peut être interrompu par des atomes d'oxygène ou de soufre ou des groupes —NH—, des phényles, un alkylphénile ou des alkylphényles, Y est un halogène ou éventuellement des groupes amino substitués alkyle, éventuellement des groupes anilino, aldéhydes, alkylcarbonyle, arylcarbonyle, carboxy, hydroxy, mercapto, cyano, hydroxyphényle, diazo, alkylester d'acide carbonique, acide sulfoné ($SO_3H$), acide phosphoreux ($PO_3H_2$), phosphino, dialkylphosphino, diarylphosphino, alkylarylphosphino, imidazolino, 4,5-dihydroimidazolino, pyridino ou epoxy substitués alkyle, b vaut 0, 1 ou 2, c vaut 1, 2 ou 3 et (b+c) vaut 1, 2 ou 3;

b) éventuellement au moins un silane à fonction silicium de la formule générale II

$$SiX_4 \quad (II)$$

dans laquelle X a la signification précédente, mais où tous les radicaux X ne sont pas de l'hydrogène.

c) éventuellement au moins un organosilane de la formule générale III

$$SiR'_aX_{(4-a)} \quad (III)$$

dans laquelle X et R' ont la signification précédente et la valeur de a est 1, 2 ou 3;

d) éventuellement au moins un oxyde peu volatile soluble dans un milieu de réaction ou au moins une liaison, formant un oxyde peu volatile, soluble dans un milieu de réaction, d'un élément des groupes principaux Ia à Va ou des sous-groupes IVb ou Vb du système périodique; et

e) éventuellement au moins une liaison métallique soluble dans le milieu de réaction, qui catalyse une réaction des analytes et/ou une liaison organique soluble dans le milieu de réaction, qui entre dans une réaction chimique avec l'analyte;

éventuellement en présence d'un catalyseur de condensation et/ou d'un solvent organique.

10. Dispositif destiné à la détermination simultanée de plusieurs composants en phase liquide ou gazeuse, comportant plusieurs capteurs selon la revendication 1, de sensibilité sélective différente pour les composants respectifs à déterminer.

11. Dispositif destiné à la détermination simultanée de plusieurs composants en phase liquide ou gazeuse, comportant plusieurs capteurs selon la revendication 6, de sensibilité sélective différente, pour les divers composants à déterminer.

12. Dispositif destiné à la détermination simultanée de plusieurs composants en phase liquide ou gazeuse, comportant plusieurs capteurs selon la revendication 8, d'une sensibilité sélective différente, pour chacun des composants à déterminer.

**Claims**

1. A sensor for selectively determining components in liquid phase or gas phase in form of a field-effect transistor, comprising a semiconductor substrate; at the surface of said semiconductor substrate at least two drain and source areas separated by a channel and having a dopant type

opposite to the semiconductor substrate; drain and source electrodes being in an electrically conductive contact to said drain and source areas; a gate insulating layer on the channel; a sensitive layer consisting of a heteropolysiloxane on said gate insulating layer, with the sensitive layer being in contact with the components to be determined; and a gate or reference electrode.

2. A sensor according to claim 1, wherein the gate insulating layer has a thickness of 30 to 200 nm.

3. A sensor according to claim 1, wherein the sensitive layer has a thickness of 10 to 1000 nm.

4. A sensor according to claim 1, wherein the sensitive layer consists of a heteropolysiloxane which has been prepared by hyrolysis and condensation of

a) at least one organofunctional silane of the general formula I

$$SiR'_bX_c(R''Y)_{(4-b-c)} \qquad (I)$$

wherein R' represents alkyl, alkenyl, aryl, aralkyl or alkylaryl, X represents hydrogen, halogen, alkoxy, acyloxy or —$NR_2$ (R=hydrogen and/or alkyl), R'' represents straight-chain or branched alkylene, which may be interrupted by oxygen or sulfur atoms or —NH— groups, phenylene, alkylphenylene or alkylenephenylene, Y denotes halogen or an optionally alkyl-substituted amino group, an optionally alkyl-substituted anilino group, an aldehyde, alkylcarbonyl, arylcarbonyl, carboxy, hydroxy, mercapto, cyano, hydroxyphenyl, diazo, carboxylic acid alkyl ester, sulfonic acid ($SO_3H$), phosphoric acid ($PO_3H_2$), phosphino, dialkylphosphino, diarylphosphino, alkylarylphosphino, imidazolino, 4,5-dihydroimidazolino, pyridino or epoxy group, b has the value 0, 1 or 2, c has the value 1, 2 or 3, and (b+c) has the value 1, 2 or 3;

b) optionally at least one silicon-functional silane of the general formula II

$$SiX_4 \qquad (II)$$

wherein X has the above meaning, but not all radicals X are hydrogen;

c) optionally at least one organosilane having the general formula III

$$SiR'_aX_{(4-a)} \qquad (III)$$

wherein X and R' have the above meaning and a has the value 1, 2 or 3;

d) optionally at least one low-volatility oxide soluble in the reaction medium or at least one low-volatility oxide forming compound of an element of main groups Ia to Va or subgroups IVb or Vb of the Periodic System which is soluble in the reaction medium; and

e) optionally at least one metal compound soluble in the reaction medium, catalyzing a reaction of the species to be analyzed, and/or at least one organic compound soluble in the reaction medium, entering into a chemical reaction with the species to be analyzed;

optionally in the presence of a condensation catalyst and/or an organic solvent.

5. A sensor according to claim 1, wherein the gate electrode is permeable for the components to be determined.

6. A sensor for selectively determining components in liquid phase or gas phase, comprising two or more electrodes and one or more dielectrics between said electrodes, with at least one dielectric having the form of a sensitive layer consisting of a heteropolysiloxane and being in contact with the components to be determined.

7. A sensor according to claim 6, wherein the electrodes exhibit an interdigitate structure.

8. A sensor according to claim 6, wherein one electrode of the sensor is connected with the gate electrode of a field effect transistor in an electrically conductive manner.

9. A sensor according to claim 6, wherein the dielectric consists of a heteropolysiloxane which has been prepared by hydrolysis and condensation of

a) at least one organofunctional silane of the general formula I

$$SiR'_bX_c(R''Y)_{(4-b-c)} \qquad (I)$$

wherein R' represent alkyl, alkenyl, aryl, aralkyl or alkylaryl, X denotes hydrogen, halogen, alkoxy, acyloxy or —$NR_2$ (R=hydrogen and/or alkyl), R'' represents straight-chain or branched alkylene which may be interrupted by oxygen or sulfur atoms or —NH— groups, phenylene, alkylphenylene or alkylenephenylene, Y represents halogen or an optionally alkyl-substituted amino group, an optionally alkyl-substituted anilino group, an aldehyde, alkylcarbonyl, arylcarbonyl, carboxy, hydroxy, mercapto, cyano, hydroxyphenyl, diazo, carboxylic acid alkyl ester, sulfonic acid ($SO_3H$), phosphoric acid ($PO_3H_2$), phosphino, dialkylphosphino, diarylphosphino, alkylarylphosphino, imidazolino, 4,5-dihydroimidazolino, pyridino or epoxy group, b has the value 0, 1 or 2, c has the value 1, 2 or 3, and (b+c) have the value 1, 2 or 3;

b) optionally at least one silicon-functional silane of the general formula II

$$SiX_4 \qquad (II)$$

wherein X has the above meaning, but not all radicals X are hydrogen;

c) optionally at least one organosilane having the general formula III

$$SiR'_aX_{(4-a)} \qquad (III)$$

wherein X and R' have the above meaning and a has the value 1, 2 or 3;

d) optionally at least one low-volatility oxide soluble in the reaction medium or at least one low-volatility oxide forming compound of an element of main groups Ia to Va or subgroups IVb or Vb of the Periodic System which is soluble in the reaction medium; and

e) optionally at least one metal compound

soluble in the reaction medium, catalyzing a reaction of the species to be analyzed, and/or at least one organic compound soluble in the reaction medium, entering into a chemical reaction with the species to be analyzed,

optionally in the presence of a condensation catalyst and/or an organic solvent.

10. Arrangement for simultaneously determining several components in liquid phase or gas phase, comprising several sensors according to claim 1 having a different selective sensitivity for each of the components to be determined.

11. Arrangements for simultaneously determining several components in liquid phase or gas phase, comprising several sensors according to claim 6 having a different selective sensitivity for each of the components to be determined.

12. Arrangement for simultaneously determining several components in liquid phase or gas phase, comprising several sensors according to claim 8 having a different selective sensitivity for each of the components to be determined.

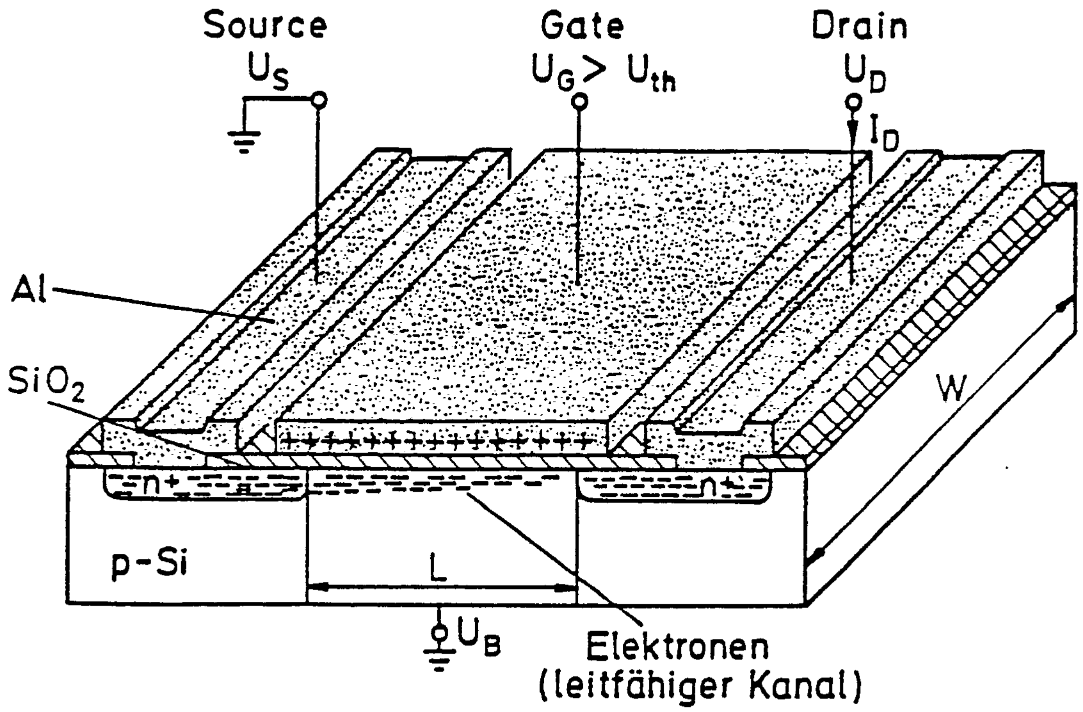


FIG. 1 Feldeffekttransistor (FET)

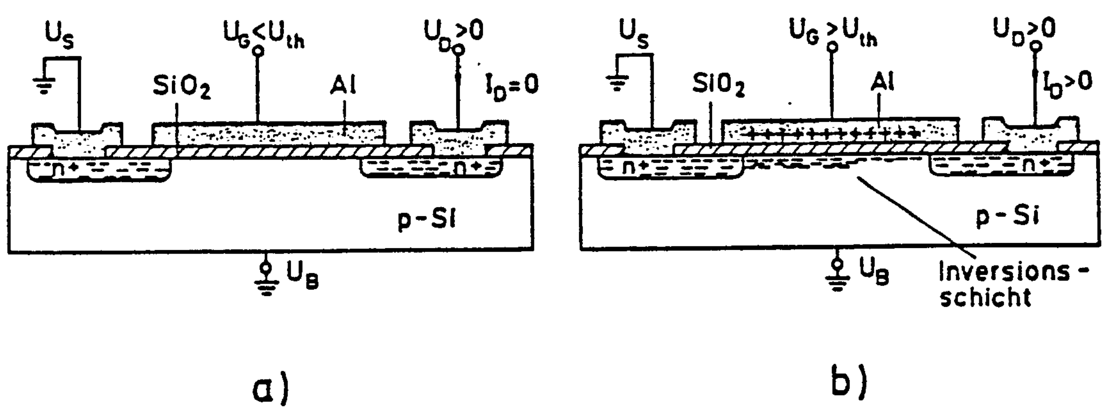


FIG. 2 Betriebszustände eines FET:
a) sperrend b) leitend

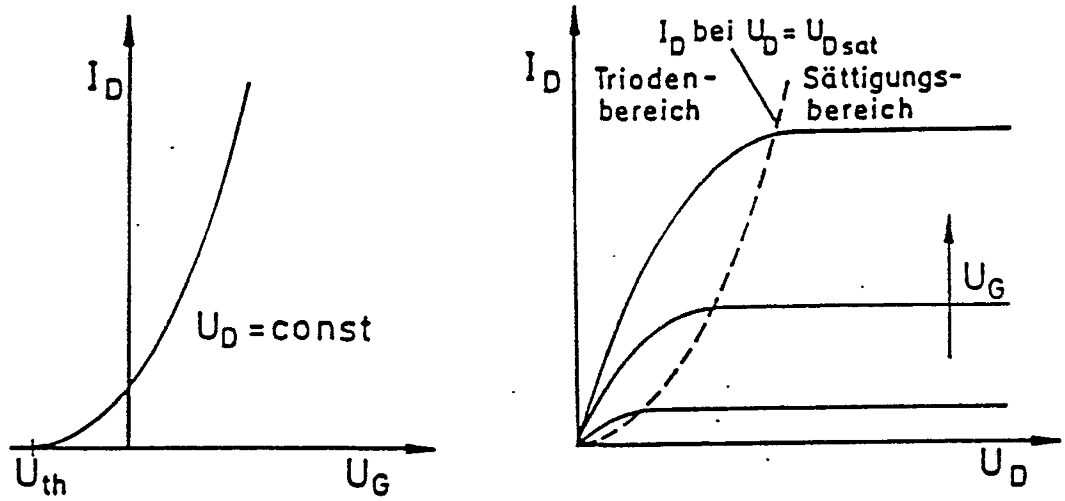


FIG. 3 Eingangs- und Ausgangskennlinien eines n-Kanal-FET

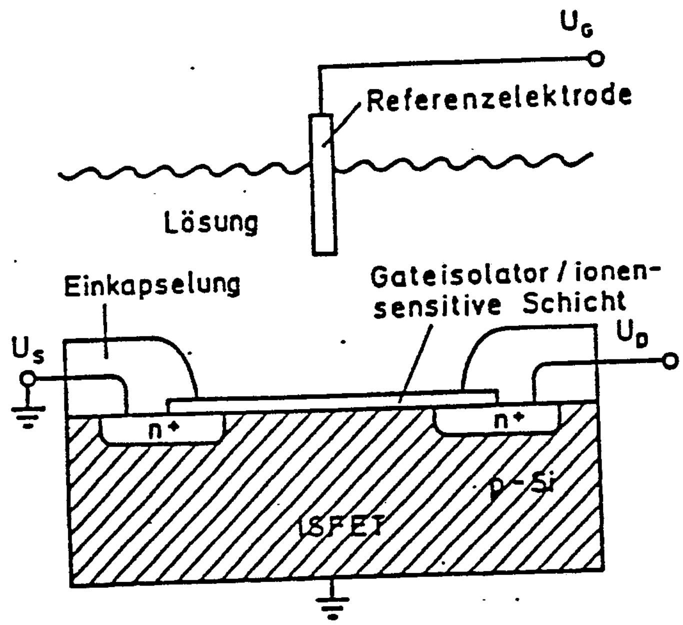


FIG. 4 Ionensensitiver FET

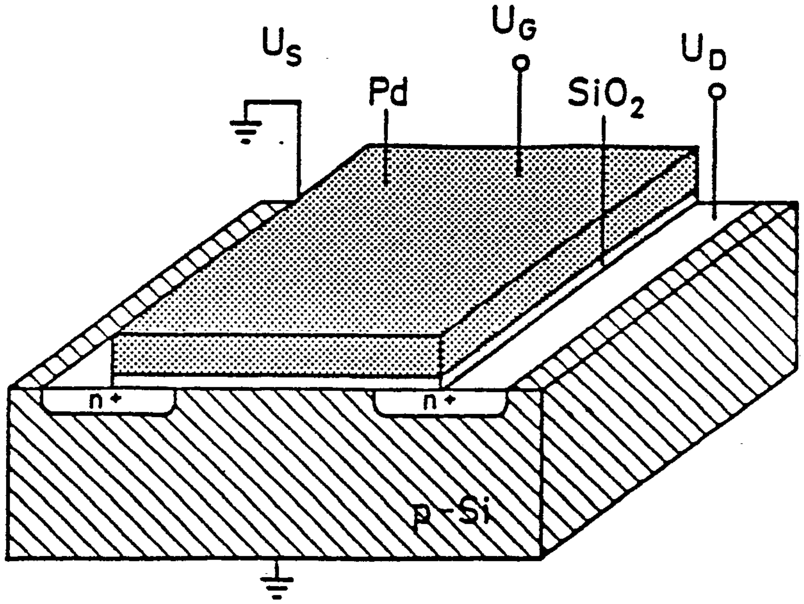


FIG. 5 FET mit Palladium-Gatemetall

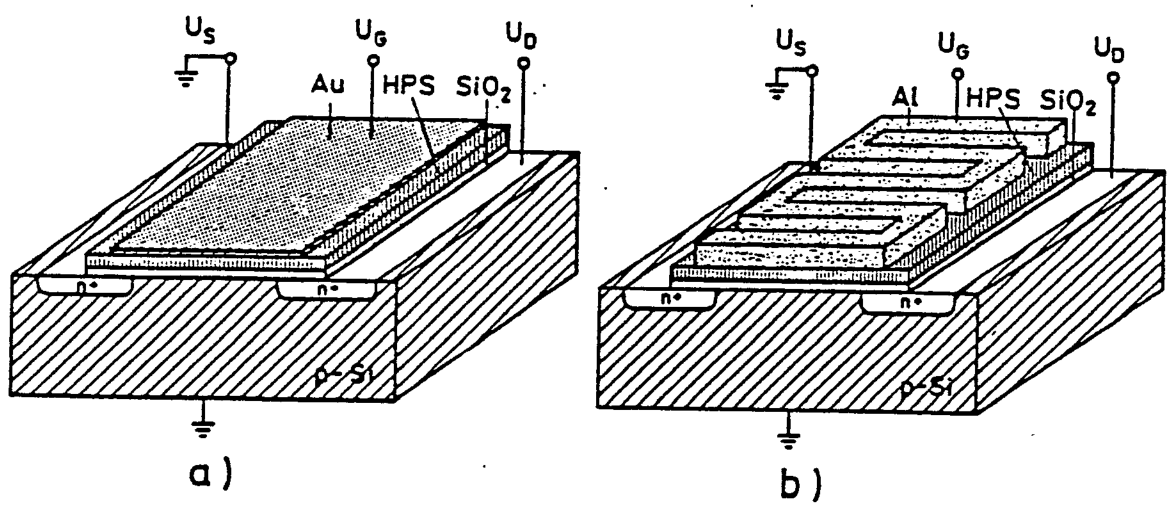


FIG. 6 FET mit HPS-Schicht

a) Gatemetallschicht aus dünnem Gold (100Å)

b) Gatemetallschicht aus Aluminium in Mäanderform

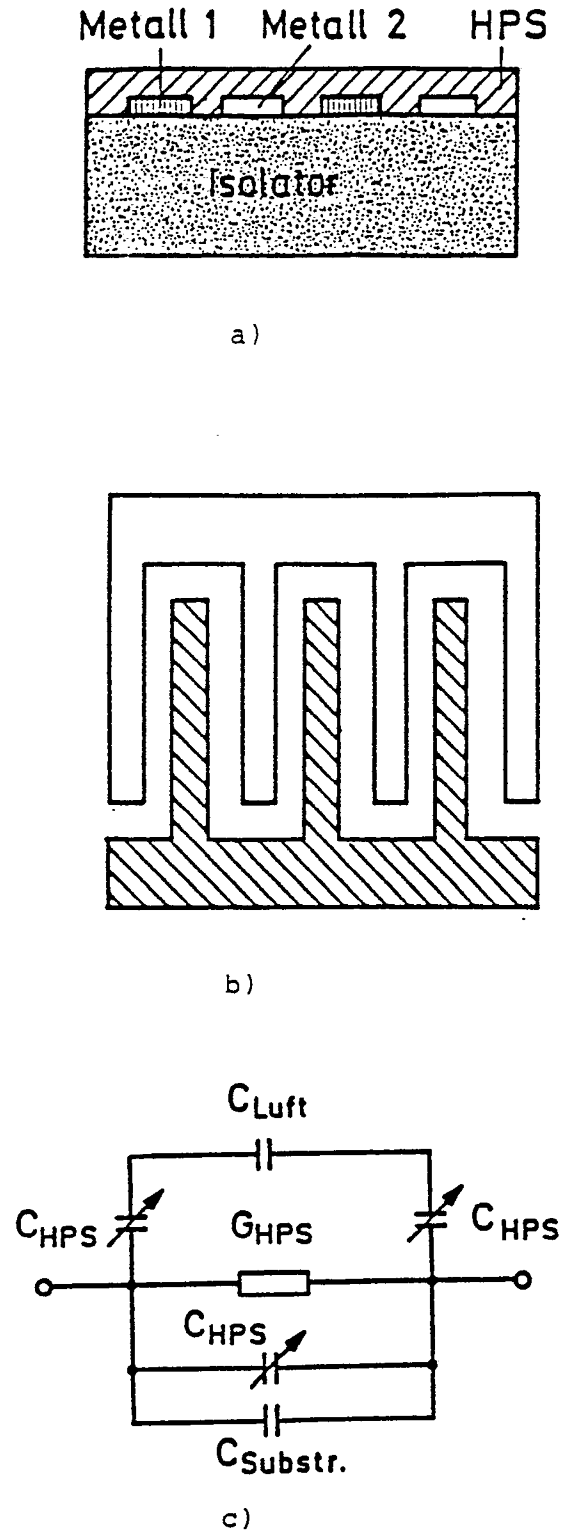


FIG. 7 Kapazitiver Sensor

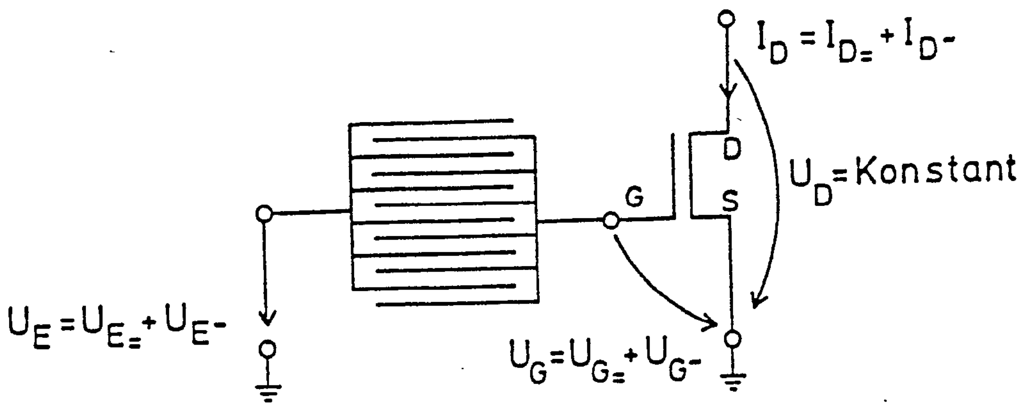


FIG. 8 Ankopplung eines kapazitiven Sensors an einen FET

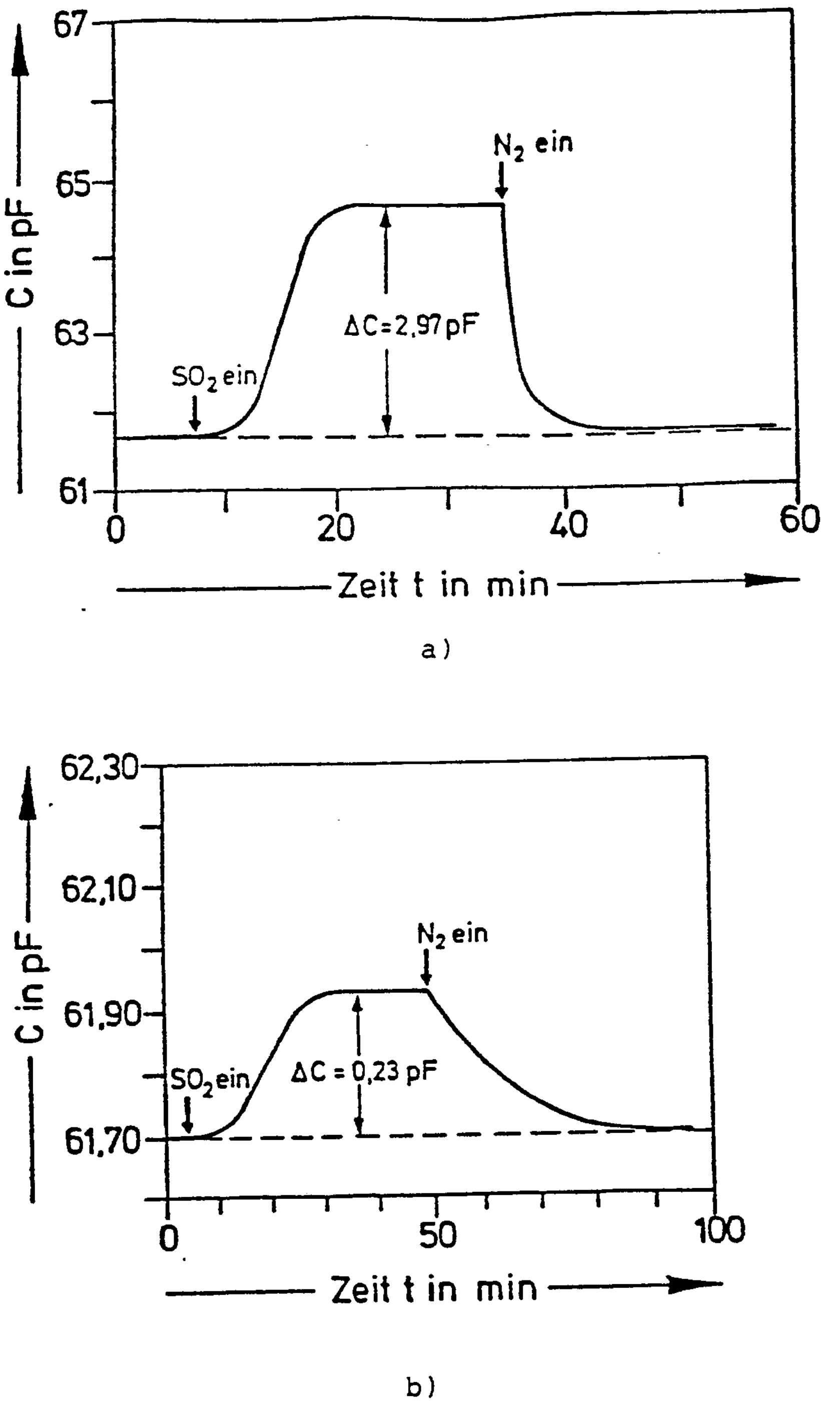


FIG. 9 Zeitlicher Verlauf der Kapazität bei Änderung der Gasatmosphäre

a) $N_2$; 100 % Vol.-% $SO_2$; $N_2$

b) $N_2$; 7,3 % Vol.-% $SO_2$ in $N_2$; $N_2$

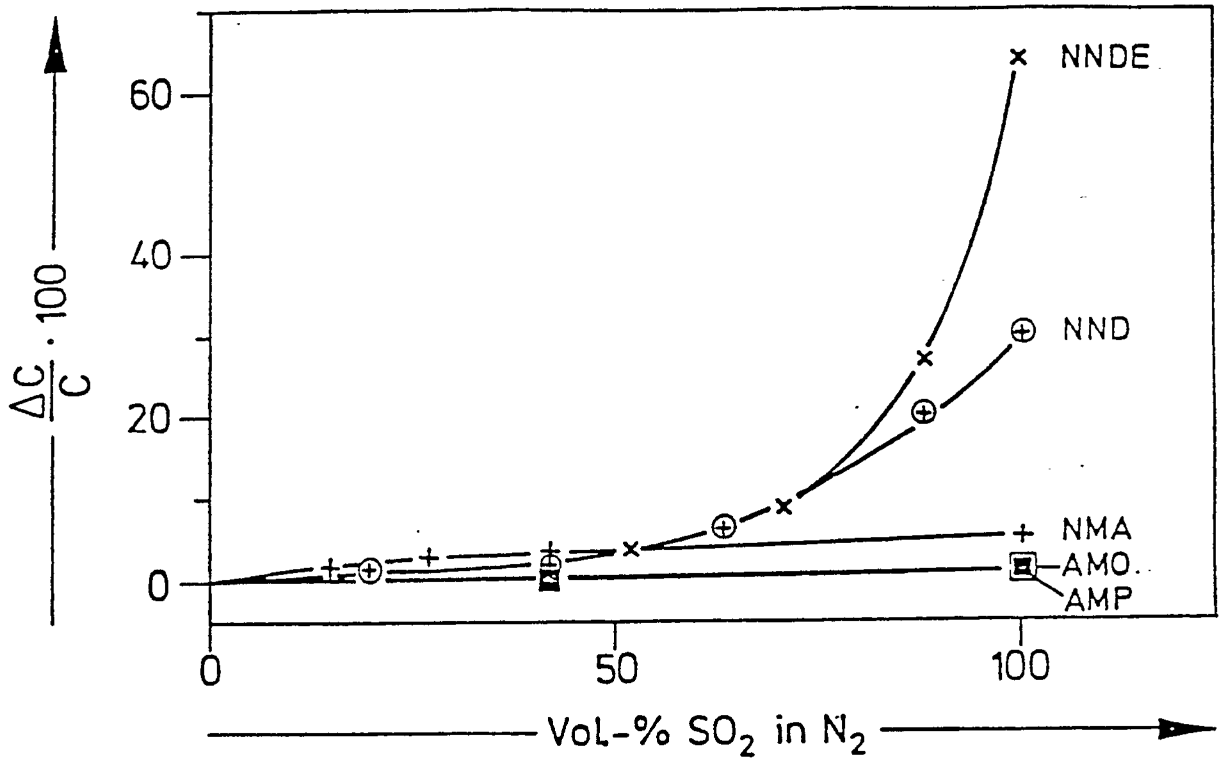


FIG. 10 Abhängigkeit der relativen Kapazitätsänderung von mit verschiedenen aminogruppenhaltigen HPS beschichteten kapazitiven Sensoren vom $SO_2$-Gehalt der Atmosphäre (20°C).

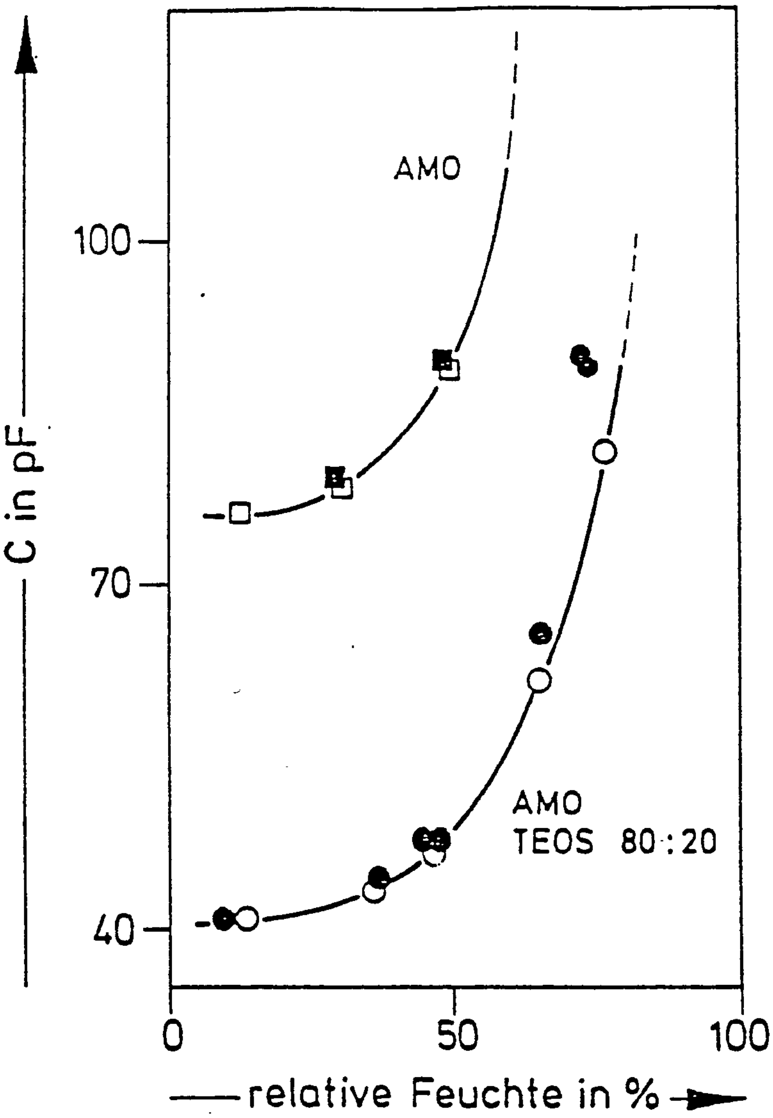


FIG. 11

Abhängigkeit der Kapazität zweier kapazitiver Sensoren von der relativen Feuchte bei 20°C in $N_2$-Atmosphäre (○□) und in $CO_2$-Atmosphäre (●■);

Beschichtung mit AMO : □ ■

Beschichtung mit AMO/TEOS (80:20) : ○ ●

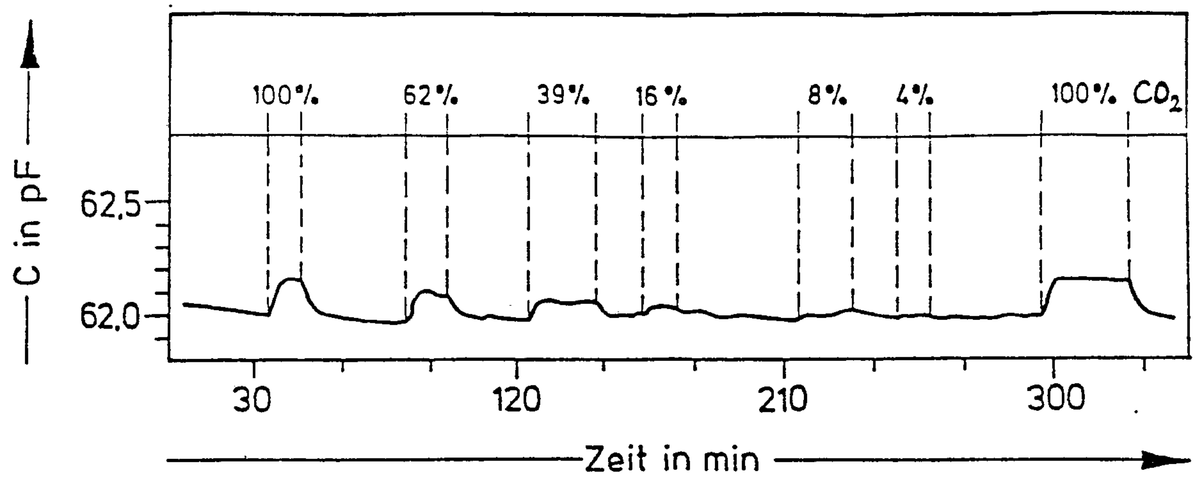


FIG. 12 Meßprotokoll eines kapazitiven Sensors mit $CuCl_2$-haltiger HPS-Schicht bei der Bestimmung von $CO_2$ (21°C).

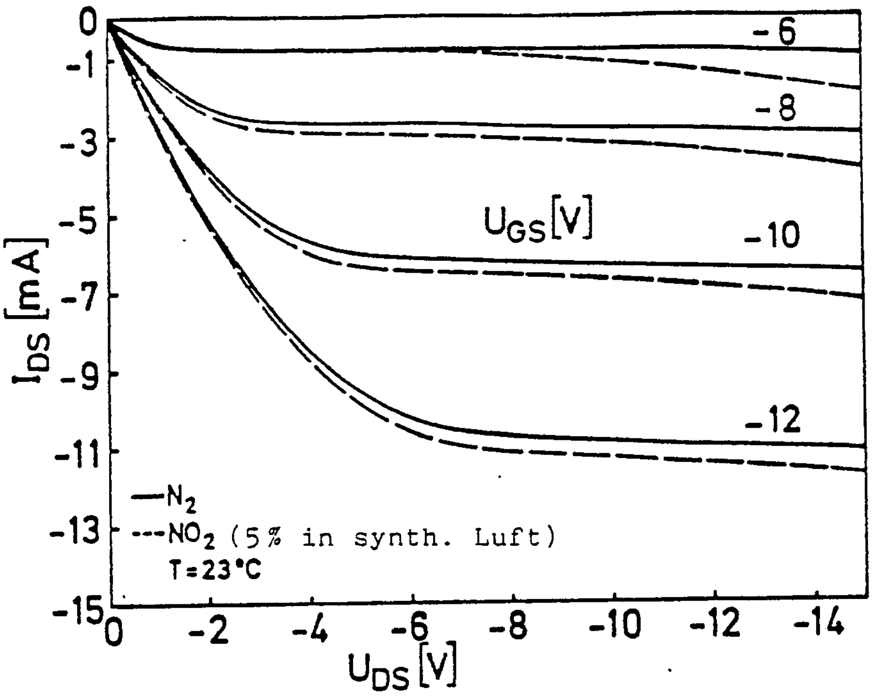


FIG. 13 Ausgangskennlinienfelder eines FET mit Gatemetallschicht aus Aluminium in Mäanderform und mit $CuCl_2$-haltiger HPS-Schicht in Stickstoffdioxid/synthetischer Luft und in Stickstoff

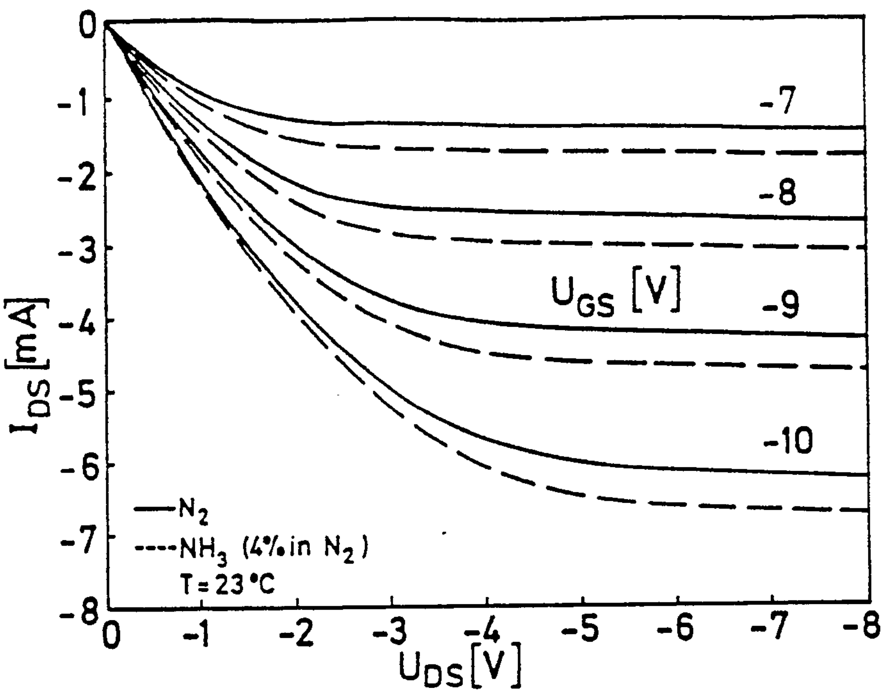


FIG. 14 Ausgangskennlinienfelder eines FET mit Gatemetallschicht aus Aluminium in Mäanderform und mit $CuCl_2$-haltiger HPS-Schicht in Ammoniak/ Stickstoff und in Stickstoff